# EUROPÄISCHE PATENTSCHRIFT

(11) **EP 0 859 979 B1**
(45) Veröffentlichungstag und Bekanntmachung des Hinweises auf die Patenterteilung: **10.05.2000**
(21) Anmeldenummer: 96945710.0
(22) Anmeldetag: 06.11.1996
(51) Int. Cl.: G06F 11/14

(54) **SCHNELLEINSCHALTUNGSVERFAHREN**
HIGH-SPEED CONNECTION METHOD
PROCEDE D'ENCLENCHEMENT RAPIDE

(30) Priorität: 08.11.1995 DE 19541651
(43) Veröffentlichungstag der Anmeldung: 26.08.1998
(73) Patentinhaber: Siemens Nixdorf Informationssysteme AG, 33106 Paderborn (DE)
(72) Erfinder: ADEMMER, Heinz, D-59590 Geseke (DE); PIELSTICKER, Ulrich, D-33104 Paderborn (DE)
(74) Vertreter: Epping, Wilhelm, Dr.-Ing.
(86) Internationale Anmeldenummer: DE9602115
(87) Internationale Veröffentlichungsnummer: WO9717645

(56) Entgegenhaltungen:
- EP-A- 0 356 538
- WO-A-85/02475

## Beschreibung

### Technisches Gebiet

Das Verfahren betrifft die vorübergehende Abschaltung von Geräten zwecks Stromeinsparung.

### Stand der Technik

In Dienstleistungsbereichen werden vermehrt Datenverarbeitungsgeräte eingesezt, um den Kunden auch zu verkehrsschwachen Zeiten bedienen zu können, ohne daß hierzu Personen tätig sind. Da die Geräte nur selten benutzt werden, ist es wünschenswert, die Geräte abzuschalten, bis ein Kunde einen Vorgang durchführen möchte.

Dieses scheitert jedoch regelmäßig daran, daß die Intialisierungsphase eines computergesteuerten Gerätes mehrere Minuten dauern kann und diese Wartezeit dem Kunden nicht zugemutet werden soll. Daher sind Geräte bekannt, bei denen durch besondere konstruktive Maßnahmen die Stromaufnahme reduziert wird. So sind Bildschirme bekannt, die bei Fehlen eines Synchronsignals nicht nur das Bild dunkel schalten, sondern auch beispielsweise die Strahlablenkung abschalten, die den größten Teil des Energieverbrauchs ausmacht. Gleichfalls bekannt sind Zentraleinheiten von Personal Computern, die die Taktfrequenz des Rechnerkerns heruntersetzen und die Massenspeicher ausschalten.

Allen diesen Lösungen gemeinsam ist jedoch, daß eine Umkonstruktion des Geräts notwendig ist, damit beispielsweise das Wiedereinschalten der Strahlablenkung oder die Erhöhung der Taktfrequenz keine störenden Wirkungen hat.

Aufgabe der Erfindung ist es daher, ein bestehendes computergesteuertes Gerät mit geringem Aufwand so zu modifizieren, daß es schnell wieder einschaltbar ist.

Diese Aufgabe wird von den in Patentansprüche 1 und 2 angegebenen Merkmalen gelöst.

### Darstellung der Erfindung

Die Erfindung benutzt die Erkenntnis, daß häufig ein Großteil der Einschaltzeit für Test- und Diagnoseroutinen benötigt wird, die deshalb so langwierig sind, weil sie keine Information über die Dauer der vorhergehenden Ausschaltphase und den Zeitpunkt der letzten Diagnose haben und daher für ein betriebssicheres Verhalten von den ungünstigsten Bedingungen ausgehen müssen.

Die Lösung für ein Gerät, das in einem Geräteverbund mit mehreren anderen Geräten betrieben wird, besteht darin, daß eines der Geräte in dem Verbund ständig aktiv bleibt und die Abschaltung der anderen Geräte bewirkt. Vor der Abschaltung des jeweiligen Geräts wird diesem mitgeteilt, daß es sich um eine Abschaltung zwecks Energieersparnis handelt. Diese Information wird von dem Gerät in einem nichtflüchtigen Speicher, der beispielsweise als CMOS-RAM häufig bereits für Konfigurationsdaten vorhanden ist, vermerkt und führt dazu, daß die Test- und Diagnoseroutinen beim Wiedereinschalten einen wesentlich verkürzten Test durchführen.

Es handelt sich also um ein Energie-Einsparungs-Betriebsverfahren, bei dem das abschaltende Gerät in einem nichtflüchtigen Speicher vermerkt, daß eine vorübergehende Abschaltung vorlag, und daraufhin bei Wiedereinschalten Prüf- und Diagnoseroutinen nicht oder in vermindertem Umfang ausführt.

### Kurzbeschreibung der Zeichnungen

Es zeigen
- Fig. 1: ein Blockschaltbild für eine Anordnung von zwei Geräten A und B,
- Fig. 2: eine Ablaufplan für das Gerät A.

### Detaillierte Beschreibung der Erfindung

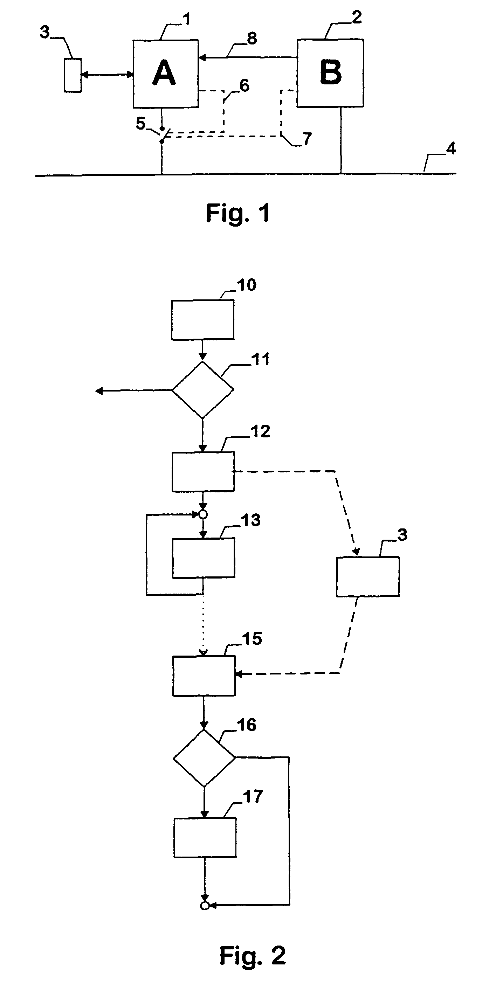

Fig. 1 zeigt zwei Geräte 1 und 2 mit den Bezeichnungen A und B, die durch eine Kommunikationsverbindung 8 miteinander verbunden sind. Beide Geräte sind mit einer Sammelstromversorgung 4 verbunden. Das Gerät 1 kann durch einen Schalter 5 bezüglich der Stromversorgung über die Verbindung 6 von dem Gerät 1 und über die Verbindung 7 von dem Gerät 2 ein- bzw. ausgeschaltet werden. An das Gerät 1 ist ferner ein nichtflüchtiger Speicher 3 angeschlossen.

Fig. 2 zeigt den Ablauf einer vorübergehenden Abschaltung in Gerät 1. In Schritt 10 wartet das Gerät 1 auf Ereignisse. In Schritt 11 wird bestimmt, ob von dem Gerät 2 eine Nachricht eingetroffen ist, daß eine vorübergehende Abschaltung bevorsteht. Trifft diese ein, so wird mit Schritt 12 fortgefahren. Hierzu wird zunächst überprüft, ob das Gerät in normalem Betriebszustand ist. Dieser Schritt ist der Übersichtlichkeit halber nicht in Fig. 2 dargestellt. Sollte nämlich ein zwar korrigierbarer, aber dennoch nicht normaler Betriebszustand während der Einschaltdiagnosen bei dem vorherigen Einschalten erkannt worden sein, wird das Gerät den Auftrag zur vorübergehenden Ausschaltung zurückweisen.

Im Normalfall jedoch ist der Auftrag aktzeptiert und wird in dem nichtflüchtigen Speicher 3 vermerkt. Schritt 13 ist eine Warteschleife, in der entweder auf die Ausschaltung durch das Gerät 2 über die Verbindung 7 gewartet oder dieser Befehl über die Verbindung 6 selbst bewirkt wird. Durch den gepunkteten Pfeil angedeutet, befindet sich dann das Gerät in einem ausgeschalteten Zustand. Gerät 2 bleibt betriebsbereit und erkennt über ein externes Ereignis, beispielsweise eine Lichtschranke (nicht gezeigt), die einen sich nahenden möglichen Benutzer anzeigt oder eine Eingabe auf einer Tastatur (nicht gezeigt), daß das Gerät 1 benötigt werden könnte. Über die Verbindung 7 schaltet daher das Gerät 2 das Gerät 1 ein. Unmittelbar nach dem Einschalten beginnt das Gerät 1 ein Prüfroutine, die immer beim Einschalten durchlaufen wird und die Grundfunktionen testet und aus dem nichtflüchtigen Speicher 3 Betriebsparameter entnimmt. Dieser Vorgang wird auch als POST, "Power On Self Test", bezeichnet. In Schritt 16 wird bestimmt, ob die Daten in dem nichtflüchtigen Speicher 3 eine Markierung enthalten, daß eine vorübergehende Abschaltung vorlag. Liegt diese Markierung vor, dann werden die durch Schritt 17 symbolisch bezeichneten Teile des POST nicht ausgeführt. Hierunter fallen ausführliche Tests der Funktionen des Gerätes 1, welche sich insbesondere nach einer längeren Betriebspause als nützlich erwiesen haben. Hierzu gehören beispielsweise Speichertests mit unterschiedliche Mustern, um Datenverkopplungen zu entdecken. Diese Test sind nach einer vorübergehenden Abschaltung entbehrlich. Ferner können dies Tests sein, die das Zusammenspiel mehrerer Komponenten testen. Ein solcher Test ist insbesondere sinnvoll, wenn Komponenten durch Reparatur ausgetauscht wurden. Ferner kann nach einer vorübergehenden Ausschaltung eine extensive Prüfung der Konsistenz der in dem nichtflüchtigen Speicher gespeicherten Parameter, insbesondere, ob Übereinstimmung zu den installierten Komponenten besteht, entfallen.

Durch diese Maßnahme ist es beispielsweise möglich, die Zeit zwischen dem Einschalten eines Geräts und seiner Betriebsbereitschaft von 60sec auf 15sec zu vermindern. Es ist dabei zu berücksichtigen, daß von einem Kunden an einem Waren- oder Dienstleistungsautomaten eine Zeit von 15sec durchaus toleriert wird, während eine Wartezeit von 60sec in vielen Fällen zumindest zur Unzufriedenheit führt.

Eine alternative Durchführung der Erfindung ist dann anwendbar, wenn das Gerät 1 ohnehin einen Zustand der Betriebspause kennt; z.B., wenn ein Drucker die Seite vollendet hat und keine weiteren Daten im Puffer hat. In einem solchen Fall kann der Drucker, sofern er über eine Uhr verfügt, die Zeit regelmäßig in den nichtflüchtigen Speicher schreiben zusammen mit einer Markierung, daß eine Betriebspause vorliegt.

Sollte er durch neue Daten die Verarbeitung wieder aufnehmen, wird dieser Vermerk im nichtflüchtigen Speicher gelöscht. Auf jeden Fall kann der Drucker während der Phase der Inaktivität abgeschaltet werden. Soll gedruckt werden, so wird der Drucker wieder eingeschaltet. In den Einschalt-Testroutinen wird dann überprüft, ob die Markierung gesetzt ist und die Zeit der Ausschaltung unter einer vorgegebenen Grenze von z.B. 6 Stunden liegt. Ist dies der Fall, dann kann ein reduzierter POST durchgeführt werden und so die Zeit zur Betriebsbereitschaft reduziert werden. Einer Nachricht von dem das Ausschalten bewirkenden Geräts bedarf es dann nicht.

Im Falle eines Druckers wird dabei zweckmäßig ein spezielles Schnittstellen-Modul als Gerät 2 vorgesehen, welches die Schnittstelle des Druckers in der Art bedient, daß es ein oder wenige Zeichen empfangen kann, diese puffert und sogleich dem sendenden Gerät signalisiert, daß der Puffer gefüllt ist, und ferner den restlichen Drucker einschaltet, welcher das Gerät 1 darstellt. Ist dieses betriebsbereit, wobei diese Zeit besonders kurz ist, wenn eine vorübergehende Abschaltung vorlag, dann kann es die Daten von der Schnittstelle abholen und hernach mit voller Geschwindigkeit den eigenen, meist erheblich größeren, Puffer füllen und ggf. mit dem Ausdrucken beginnen.

Das Betriebsverfahren in beiden Varianten kann also durchaus auch angewendet werden, wenn die "Geräte" nicht durch verschiedene Gehäuse getrennte Einheiten, sondern Moduln innerhalb eines einzigen Gehäuses sind, sofern der vorübergehend abzuschaltende Modul eine umfangreiche Selbstdiagnose beim Einschalten der Betriebsspannung vollführt und auf einen nichtflüchtigen Speicher zugreifen kann.

## Patentansprüche

1. Energie-Einsparungs-Betriebsverfahren für ein erstes Gerät oder Modul, welches elektronisch ein- und ausschaltbar ist, nach dem Einschalten Prüfroutinen, beispielsweise für Test und Diagnose, durchführt und auf einen nichtflüchtigen Speicher Zugriff hat sowie von einem zweiten Gerät aus einschaltbar ist, mit den Schritten:
- das zweite Gerät sendet dem ersten Gerät eine Nachricht, daß die nachfolgende Abschaltung des ersten Geräts eine vorübergehende Abschaltung ist, welche Nachricht das erste Gerät dazu veranlaßt, diese Information in dem nichtflüchtigen Speicher abzulegen,
- woraufhin die Spannungsversorgung des ersten Geräts abgeschaltet wird;
- auf Grund eines Zeitablaufs oder eines äußeren Ereignisses bewirkt das zweite Gerät die Wiedereinschaltung des ersten Geräts,
- welches erste Gerät daraufhin, sofern in dem nichtflüchtigen Speicher vermerkt war, daß eine vorübergehende Abschaltung vorlag, die Initalisierungsphase dadurch verkürzt, daß jeweils oder in Kombination
* Prüfroutinen, die der Überprüfung der Funktionsfähigkeit einzelner Komponenten dienen, gar nicht oder nur in vermindertem Umfang ausgeführt werden,
* Prüfroutinen, die der Überprüfung von gespeicherten Konfigurationsdaten dienen, gar nicht oder nur in vermindertem Umfang ausgeführt werden.

2. Energie-Einsparungs-Betriebsverfahren für Gerät oder Modul, welches elektronisch ein- und ausschaltbar ist, nach dem Einschalten Prüfroutinen, beispielsweise für Test und Diagnose, durchführt, auf einen nichtflüchtigen Speicher und eine von der Stromversorgung unabhängige Uhr zugreifen kann, mit den Schritten:
- befindet sich das Gerät in einer Betriebspause, so speichert es in regelmäßigen Abständen diese Information zusammen mit einer Zeitangabe aus der Uhr in dem nichtflüchtigen Speicher ab,
- verläßt das Gerät eine Betriebspause, so löscht es die abgespeicherte Zeitinformation;
- nach einem Einschalten wird geprüft, ob in dem nichtflüchtigen Speicher eine gültige Zeitangabe vorliegt, die, verglichen mit einer vorgegebenen Schranke, nicht veraltet ist, zutreffendenfalls jeweils oder in Kombination
* Prüfroutinen, die der Überprüfung der Funktionsfähigkeit einzelner Komponenten dienen, gar nicht oder in nur vermindertem Umfang ausgeführt werden,
* Prüfroutinen, die der Kontrolle von gespeicherten Konfigurationsdaten dienen, gar nicht oder in nur vermindertem Umfang ausgeführt werden.

## Claims

1. Energy-saving operating method for a first device or module which can be switched on and off electronically, carries out test routines, for example for test and diagnosis, after activation and has access to a nonvolatile memory, and can also be switched on from a second device, having the steps:
- the second device sends to the first device a message that the subsequent disconnection of the first device is a temporary disconnection, which message causes the first device to store this information item in the nonvolatile memory,
- whereupon the voltage supply of the first device is disconnected;
- the second device effects the reactivation of the first device on the basis of a period of time having elapsed or on the basis of an external event,
- which first device, provided that the fact that temporary disconnection occurred was recorded in the nonvolatile memory, thereupon shortens the initialization phase in that, in each case at a time or in combination,
* test routines serving to check the functionality of individual components are not executed at all or are executed only to a reduced extent,
* test routines serving to check stored configuration data are not executed at all or are executed only to a reduced extent.

2. Energy-saving operating method for a device or module which can be switched on and off electronically, carries out test routines, for example for test and diagnosis, after activation and can access a nonvolatile memory and a clock which is independent of the power supply, having the steps:
- if the device is in an operating intermission, then it stores this information at regular intervals together with a time detail from the clock in the nonvolatile memory,
- if the device leaves an operating intermission, then it erases the stored time information;
- after activation, a check is made to see whether the nonvolatile memory contains a valid time detail which is not out of date compared with a predetermined limit, and, if appropriate, in each case at a time or in combination,
* test routines serving to check the functionality of individual components are not executed at all or are executed only to a reduced extent,
* test routines serving to check stored configuration data are not executed at all or are executed only to a reduced extent.

## Revendications

1. Procédé de fonctionnement avec économie d'énergie d'un premier appareil ou module, qui peut être mis en et hors circuit électroniquement, qui met en oeuvre des sous-programmes de contrôle, par exemple pour un test et un diagnostic après la mise en circuit, qui a accès à une mémoire non volatile, et qui peut être mis en circuit à partir d'un deuxième appareil, selon les étapes suivantes
- Le deuxième appareil envoie au premier appareil un message indiquant que la mise hors circuit à venir du premier appareil est une mise hors circuit temporaire, ce message faisant que le premier appareil met cette information dans la mémoire non volatile,
- puis l'alimentation en tension du premier appareil est interrompue ;
- en fonction d'un laps de temps ou d'un événement extérieur, le deuxième appareil remet le premier appareil en circuit,
- premier appareil qui, s'il a été noté dans la mémoire non volatile qu'il s'agit d'une mise hors circuit temporaire, écourte la phase d'initialisation de telle sorte que séparément ou en combinaison
- des sous-programmes de contrôle servant à contrôler la capacité à fonctionner de diverse composante, ne sont absolument pas exécutés ou ne le sont que dans une moindre mesure,
- des sous-programmes de contrôle, servant à contrôler les données de configuration mémorisées, ne sont pas du tout exécutées ou ne le sont que dans une moindre mesure.

2. Procédé de fonctionnement avec économie d'énergie d'un appareil ou module, qui peut être mis en et hors circuit électroniquement, qui met en oeuvre des sous-programmes de contrôle, par exemple pour un test et un diagnostic après la mise en circuit, et peut accéder à une mémoire non volatile et à une horloge indépendante de l'alimentation en courant, selon les étapes suivantes :
- si l'appareil se trouve en interruption de fonctionnement, il mémorise, à des intervalles réguliers, cette information conjointement avec une indication de temps issue de l'horloge de la mémoire non volatile,
- si l'appareil sort d'une interruption de fonctionnement, il efface l'information de temps mémorisée ;
- après une mise en circuit, s'il se trouve dans la mémoire non volatile une indication de temps valide qui, comparée à une limite prescrite, n'est pas périmée, le cas échéant, respectivement ou en combinaison,
- les sous-programmes de contrôle, servant à contrôler la capacité à fonctionner des divers composants, ne sont pas du tout exécutés ou ne le sont que dans une moindre mesure,
- les sous-programmes de contrôle, servant à contrôler les données de configuration mémorisées, ne sont pas du tout exécutés ou ne le sont que dans une moindre mesure.
